# EUROPEAN PATENT APPLICATION

(11) **EP 4 708 418 A1**
(43) Date of publication of application: **11.03.2026**
(21) Application number: 25172983.6
(22) Date of filing: 28.04.2025
(51) Int. Cl.: H01M 10/04, B29C 53/02, B29C 65/00, H01M 50/105, H01M 50/136

(54) **APPARATUS AND METHOD FOR FOLDING SIDES OF POUCH-TYPE BATTERY AND DIE FOR THE SAME**

(30) Priority: 10.09.2024 KR 20240123573
(71) Applicant: SAMSUNG SDI CO., LTD., Yongin-si, Gyeonggi-do 17084 (KR)
(72) Inventor: KIM, Chiyoung, Yongin-si, Gyeonggi-do 17084 (KR); LEE, Jehyun, Yongin-si, Gyeonggi-do 17084 (KR); SONG, Hojin, Yongin-si, Gyeonggi-do 17084 (KR); SONG, Jungyeon, Yongin-si, Gyeonggi-do 17084 (KR)
(74) Representative: Marks & Clerk LLP

(57) **Abstract**

An apparatus and a method for folding sides of a pouch-type battery and a die for the same are disclosed. The apparatus for folding sides of a pouch-type battery includes a die including a folding formation space including an inlet through which a side of a pouch-type battery enters, an outlet through which the side of the pouch-type battery exits, and a side opening formed on one side of the die to guide the side of the pouch-type battery to pass therethrough, and a transfer unit that transfers the pouch-type battery along a longitudinal direction of the die. A space between the inlet and the outlet of the folding formation space is formed so that the side of the pouch-shaped battery having entered the inlet is gradually folded while moving and finally the outlet has a final folding shape.

## Description

### FIELD

The present disclosure relates to an apparatus and a method for folding sides of a pouch-type battery and a die for the same.

### BACKGROUND

Unlike primary batteries that are not designed to be recharged, secondary batteries are designed to be repeatedly discharged and recharged. Low-capacity secondary batteries are used in small portable electronic devices, such as smart phones, feature phones, notebook computers, digital cameras, and camcorders, while large-capacity secondary batteries are widely used as power sources for driving motors, such as of hybrid vehicles or electric vehicles, and for power storage.

A pouch-type battery includes an electrode assembly and a pouch that accommodates the electrode assembly. The pouch-type battery is formed by wrapping the electrode assembly into a pouch and sealing edges of the pouch. Accordingly, a terrace having a predetermined width may be formed on both sides of the sealed pouch.

Since a terrace occupies an area on the side, a side folding configuration of folding the terrace, such as Korean Patent Registration No. 10-2292557 entitled "Double Side Folding Apparatus for Terrace of Secondary Battery and Method thereof", has been proposed in order to reduce the mounting size of a battery. However, the apparatus in the related art has a problem in that the configuration is complicated and it takes a lot of work time because secondary folding is performed after primary folding.

The above information disclosed in this Background section is for enhancement of understanding of the background of the present disclosure, and therefore, it may contain information that does not constitute a prior art.

### SUMMARY

Aspects of embodiments of the present disclosure provide an apparatus and a method for folding sides of a pouch-type battery, which can efficiently fold both sides of the pouch-type battery, and a die for the same.

However, the technical problem to be solved by the present disclosure is not limited to the above problem, and other problems not mentioned herein, and aspects and features of the present disclosure that would address such problems, will be clearly understood by those skilled in the art from the description of the present disclosure below.

An apparatus for folding sides of a pouch-type battery according to embodiments of the present disclosure includes: a die comprising a folding formation space comprising an inlet through which a side of a pouch-type battery enters, an outlet through which the side of the pouch-type battery exits, and a side opening formed on one side of the die to guide the side of the pouch-type battery to pass therethrough; and a transfer unit that transfers the pouch-type battery along a longitudinal direction of the die.

In embodiments, the folding formation space is formed so that the side of the pouch-shaped battery having entered the inlet is gradually folded while moving and, at the outlet, has a final folding shape.

In embodiments, the inlet of the folding formation space has a straight shape, and the outlet has a shape in which the side is folded once. In embodiments, the inlet of the folding formation space has a straight shape, and the outlet has, as the final folding shape, a shape in which the side is folded a plurality of times.

In embodiments, a notch may be formed in the inlet of the folding formation space.

In embodiments, the die includes a left die for folding a left side of the pouch-type battery, and a right die for folding a right side of the pouch-type battery.

In embodiments, the apparatus for folding sides of a pouch-type battery may further include a side post-processing unit that presses, toward a battery body, folded sides of the pouch-type battery having passed through the die.

In embodiments, the apparatus for folding sides of a pouch-type battery may further include a die heating unit that heats the die at a predetermined temperature.

A method for folding sides of a pouch-type battery according to embodiments of the present disclosure includes: allowing a side of a pouch-type battery to pass from an inlet of a die comprising a folding formation space comprising the inlet through which the side of the pouch-type battery enters, an outlet through which the side of the pouch-type battery exits, and a side opening formed on one side of the die to guide the side of the pouch-type battery to pass therethrough.

In embodiments, a space between the inlet and the outlet of the folding formation space is formed so that the side of the pouch-shaped battery having entered the inlet is gradually folded while moving and, at the outlet, has a final folding shape.

In embodiments, the inlet of the folding formation space may have a straight shape, and the outlet may have, as the final folding shape, a shape in which the side is folded once. In embodiments, the inlet of the folding formation space has a straight shape, and the outlet has, as the final folding shape, a shape in which the side is folded a plurality of times.

In embodiments, in the method for folding sides of a pouch-type battery, a left side of the pouch-type battery may be arranged to pass through a left die and a right side of the pouch-type battery may be arranged to pass through a right die.

In embodiments, in the method for folding sides of a pouch-type battery, a notch may be formed in the inlet of the folding formation space.

In embodiments, the method for folding sides of a pouch-type battery may further include pressing, toward a battery body, folded sides of the pouch-type battery having passed through the die.

In embodiments, the method for folding sides of a pouch-type battery may further include heating the die at a predetermined temperature.

A die for folding sides of a pouch-type battery according to embodiments of the present disclosure is formed with a folding formation space through which a side of the pouch-type battery passes. The folding formation space includes: an inlet formed on a front side of the die and through which the side of the pouch-type battery enters; an outlet formed on a rear side of the die and through which the side of the pouch-type battery exits; and a side opening formed on a side of the die to guide the side of the pouch-type battery to pass therethrough.

In embodiments, in the die for folding sides of a pouch-type battery, a space between the inlet and the outlet may be formed so that the side of the pouch-shaped battery having entered the inlet is gradually folded while moving and, at the outlet, has a final folding shape.

In embodiments, the inlet may have a straight shape, and the outlet may have a shape in which the side is folded once or a plurality of times.

In embodiments, a notch may be formed in the inlet of the die.

According to embodiments of the present disclosure, side folding of a pouch-type battery can be efficiently performed by allowing both sides of the pouch-type battery to simply pass through a die. In addition, since an apparatus is inexpensive and compact compared to an apparatus in the related art, it takes up less space. In addition, since the configuration of the apparatus is simple, failure is less likely to occur and maintenance is easy. In addition, according to embodiments of the present disclosure, first folding to N^{th} folding can be easily implemented depending on the configuration of a die to be used.

However, effects of the present disclosure which may be obtained according to the embodiments described are not limited to the aforementioned effects, and other effects not described above may be evidently understood by those skilled in the art from the following description.

At least some of the above and other features of the invention are set out in the claims.

### BRIEF DESCRIPTION OF THE DRAWINGS

The following drawings attached to this specification illustrate embodiments of the present disclosure, and help to further understand the technical scope of the present disclosure along with the aforementioned contents of the disclosure. Accordingly, the present disclosure should not be construed as being limited to only contents illustrated in and described with reference to such drawings:
FIG. 1 is a partial exploded perspective view of a pouch-type battery according to embodiments.
FIG. 2 is a perspective view of a right die used for side folding according to embodiments of the present disclosure;
FIG. 3 is a conceptual diagram for explaining a side folding method according to embodiments of the present disclosure;
FIG. 4 is a plan view of a die according to embodiments and illustrates the cross-sectional positions of the cross-sectional views shown in FIGS. 5A-5F and 6A-6F;
FIG. 5A is a front view of a right die according to embodiments of the present disclosure;
FIGS. 5B, 5C, 5D, and 5E are cross-sectional views of the right die;
FIG. 5F is a rear view of the right die;
FIG. 6A is a front view of a left die according to embodiments of the present disclosure;
FIGS. 6B, 6C, 6D, and 6E are cross-sectional views of the left die;
FIG. 6F is a rear view of the left die;
FIGS. 7A, 7B, and 7C illustrate states in which both sides of a pouch are folded while a pouch-type battery passes through dies according to a side folding method according to embodiments of the present disclosure;
FIG. 8A, 8B, and 8C are views of a die according to embodiments of the present disclosure;
FIG. 9 is a cross-sectional view illustrating a notch formed at an inlet of a die according to embodiments; and
FIG. 10 is a functional block diagram illustrating the configuration of an apparatus for folding sides of a pouch-type battery according to embodiments of the present disclosure.

### DETAILED DESCRIPTION

Example embodiments of the present disclosure will be described below in detail with reference to the accompanying drawings. Prior to the description, it is noted that the terms or words used in this specification and claims should not be construed as being limited to common or dictionary meanings but instead should be understood to have meanings and concepts in agreement with the scope of the present disclosure based on the principle that an inventor can define the concept of each term suitably in order to describe his/her own invention in the best way possible. Accordingly, since the embodiments described in this specification and the configurations illustrated in the drawings are only an example of the present disclosure and they do not cover all the technical ideas of the present disclosure, it should be understood that various changes and modifications may be made at the time of filing this application.

It will be further understood that the terms "comprises/includes" and/or "comprising/including" when used herein, specify the presence of stated features, integers, steps, operations, elements, components, and/or groups thereof, but do not preclude the presence or addition of one or more other features, integers, steps, operations, elements, components, and/or groups thereof.

In order to facilitate understanding of the present disclosure, the accompanying drawings are not drawn to scale and the dimensions of some components may be exaggerated. It should be noted that the same reference numerals are designated to the same components in different embodiments.

Reference to two compared elements, features, etc. as being "the same" means that they are "substantially the same". Therefore, the phrase "substantially the same" may include a deviation that is considered low in the art, for example, a deviation of 5% or less. The uniformity of any parameter in a given region may mean that it is uniform from an average perspective.

Although the terms such as "first" and/or "second" are used to describe various components, these components are not limited by these terms, of course. These terms are only used to distinguish one component from another component. Thus, unless specifically stated to the contrary, a first component may be termed a second component without departing from the teachings of example embodiments.

Throughout the specification, unless otherwise stated, each element may be singular or plural.

Arrangement of any component "above (or below)" or "on (or under)" a component may mean that any component is disposed in contact with the upper (or lower) surface of the component, as well as that other components may be interposed between the element and any element disposed on (or under) the element.

It will be understood that, when a component is referred to as being "connected", "coupled", or "joined" to another component, not only can it be directly "connected", "coupled", or "joined" to the other element, but also can it be indirectly "connected", "coupled", or "joined" to the other element with other elements interposed therebetween.

As used herein, the term "and/or" includes any and all combinations of one or more of the associate listed items. The use of "may" when describing embodiments of the present disclosure relates to "one or more embodiments of the present disclosure". Expressions such as "at least one" and "one or more" preceding a list of elements modify the entire list of elements and do not modify the individual elements in the list.

Throughout the specification, when "A and/or B" is stated, it means A, B, or A and B, unless otherwise stated. In addition, when "C to D" is stated, it means C or more and D or less, unless specifically stated to the contrary.

When the phrase such as "at least one of A, B, and C", "at least one of A, B, or C", "at least one selected from the group of A, B, and C", or "at least one selected from among A, B, and C" is used to designate a list of elements A, B, and C, the phrase may refer to any and all suitable combinations.

The term "use" may be considered synonymous with the term "utilize". As used herein, the terms "substantially," "about," and similar terms are used as terms of approximation rather than as terms of degree, and are intended to account for inherent variations in measured or calculated values that would be recognized by those of ordinary skill in the art.

It will be understood that, although the terms first, second, third, etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Accordingly, a first element, component, region, layer, or section discussed below may be termed a second element, component, region, layer, or section without departing from the teachings of example embodiments.

For ease of explanation in describing the relationship of one element or feature to another element(s) or feature(s) as illustrated in the drawings, spatially relative terms such as "beneath", "below", "lower", "above", and "upper" may be used herein. It will be understood that spatially relative positions are intended to encompass different directions of the device in use or operation in addition to the direction depicted in the drawings. For example, if the device in the drawings is turned over, any element described as being "below" or "beneath" another element would then be oriented "above" or "over" another element. Therefore, the term "below" may encompass both upward and downward directions.

The terminology used herein is for the purpose of describing embodiments of the present disclosure and is not intended to limit the present disclosure.

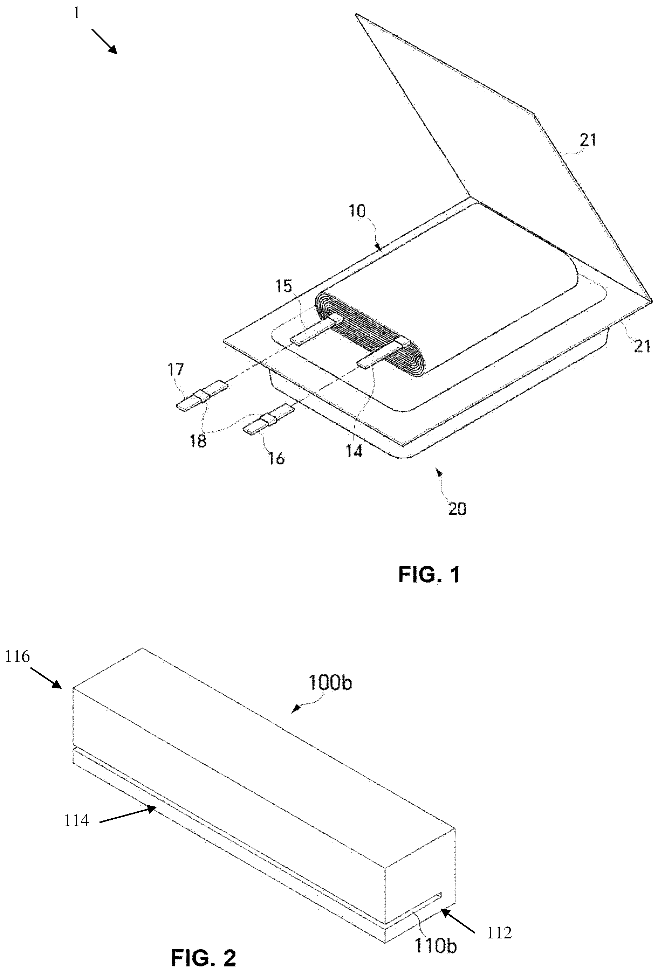

FIG. 1 is a partial exploded perspective view of a pouch-type battery 1 according to embodiments.

The pouch-type secondary battery 1 includes an electrode assembly 10 and a pouch 20 accommodating the electrode assembly 10.

A first electrode tab 14 and a second electrode tab 15 as shown in FIG. 1 are respectively welded to a first electrode lead 16 and a second electrode lead 17 of an external terminal to be electrically connected to the outside. A tab film 18 for insulation from the pouch 20 is attached to the first electrode lead 16 and the second electrode lead 17.

In a state in which the electrode assembly 10 is accommodated in the pouch 20, sealing parts of edges of the pouch 20 come into contact with each other to be sealed. The sealing is performed in a state in which the tab film 18 is disposed between the sealing parts. The sealing parts at the bottom portion of the pouch 20 as well as the top portion may be made of a heat-fusible material and may have a structure in which sealing is achieved by bonding heat-fusible layers to each other. Because the heat-fusible material generally has weak adhesion to metal, the tab film 18 in the form of a thin film is attached to a tab to be fused to the pouch 20.

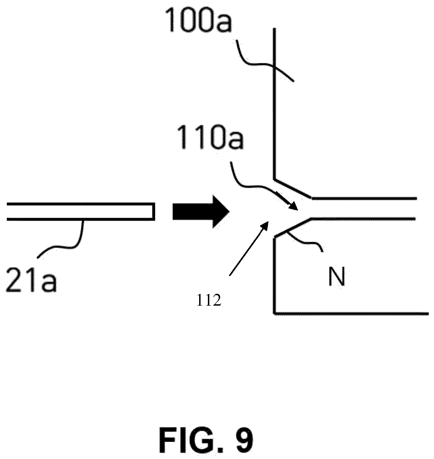

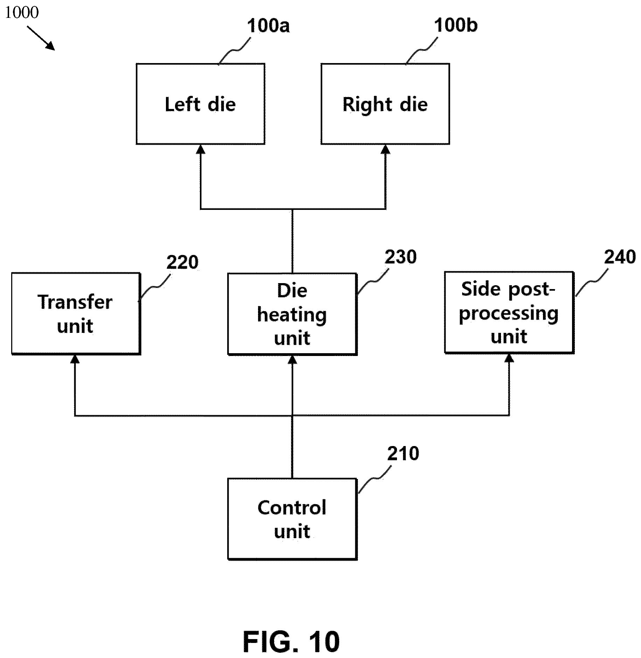

In embodiments of the present disclosure, side folding is implemented by allowing a terrace (hereinafter, referred to as "side" 21;21a;21b) formed by contact of the sealing parts of a pouch-type battery 1 to pass through a die 100a;100b (100b is shown in FIG. 2; dies 100a;100b ). The pouch-type battery 1 may be transferred toward two dies 100a,100b disposed on respective sides 21a;21b in the transfer direction of the pouch-type battery 1, and both sides of the pouch-type battery 1 may be inserted into inlets 112 of the two dies 100a,100b, respectively. As the pouch-type battery 1 continues to be transferred, both sides 21a,21b thereof pass through folding formation spaces 110a,110b (FIG. 2) in the dies 100a,110b and are gradually folded in this process, and when both sides 21a,21b come out of the dies 100a,100b, outlets 116 have a final folding shape. Depending on the shape of the folding formation space 110a;11b of the die 100a;110b, it is possible to implement from primary folding to a plurality of foldings. In embodiments, heating means may be further provided in the die 100a;110b so that the sides 21;21a;21b of the pouch-type battery 1 can be folded well. In embodiments, a side post-processing unit 240 (FIG. 10) may be further provided to press both sides 21; 21a,21b of the pouch-type battery 1, which has passed through the die 110a;100b, toward a battery body from the side. In embodiments, the inlet 112 of the die 110a;110b may be formed with a notch 910 (FIG. 9) so that the sides 21 of the pouch-type battery 1 can easily enter.

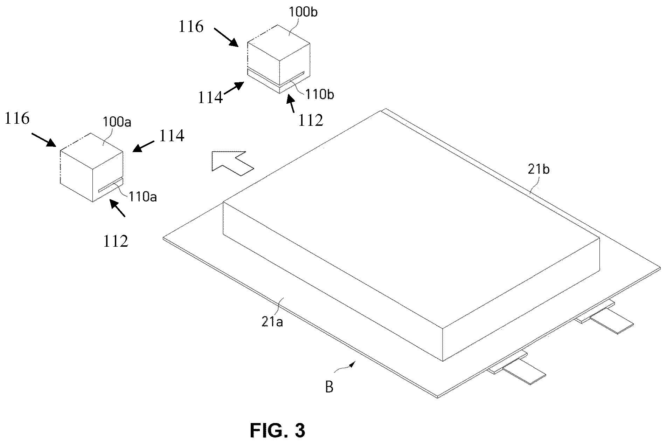

FIG. 2 is a perspective view of a die 100b used for side folding according to embodiments of the present disclosure. The die 100b may be a right die (FIG. 3) according to the orientation shown. The die 100b is formed with a folding formation space 110b through which a side 21b of the pouch-type battery 1 passes. The folding formation space 110b includes an inlet 112 formed on the front side of the die 100b and through which the side 21b of the pouch-type battery 1 enters, an outlet 116 formed on the rear side of the die 100b and through which the side 21b of the pouch-type battery 1 exits, and a side opening 114 formed on the left side of the die 100b, in the example illustration of FIG. 2, to guide the side 21b of the pouch-type battery 1 to pass therethrough. A right side 21b of the pouch-type battery 1 is inserted into the inlet 112 of the folding formation space 110b of the die 100b, according to the illustrated orientation, and moves along the side opening 114 in a state of being inserted into the folding formation space 110b and then exits through the outlet 116.

The inlet 112 of the folding formation space 110b has a straight shape as a cross-sectional shape where the side 21b of the pouch-type battery 1 enters, and the outlet 116 has a final folding shape of the pouch-type battery side 21b. A space (folding formation space 110b) between the inlet 112 and the outlet 116 is formed so that the side 21b of the pouch-shaped battery 1, having entered the inlet 112 is gradually folded while passing through the folding formation space 110b and, at the outlet 116, has the final folding shape.

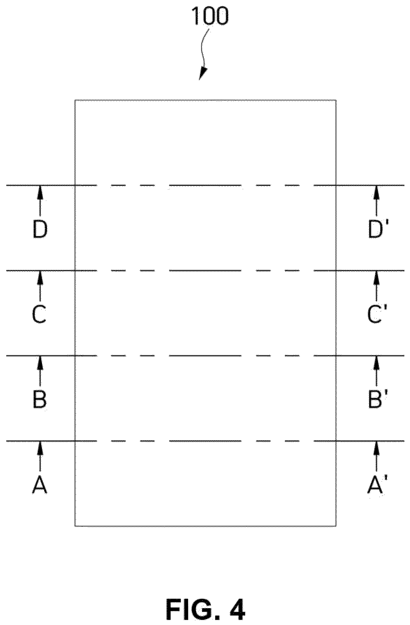

That is, as the pouch-shaped battery 1 is transferred along the longitudinal direction of the die 100b, the side 21b passes through the folding formation space 110b of the die 100b, the side 21b is gradually folded in this process, and when the side 21b comes out of the die 100b, the side 21b at the outlet 116 has the final folding shape. As shown in FIG. 3, a left die 100a has a shape that is inverted left and right from the right die 100b. The shape of the folding formation space 110b is described below with reference to FIGS. 4 to 6.

FIG. 3 is a conceptual diagram for explaining a side folding method according to embodiments of the present disclosure.

A pouch-type battery 1 is transferred toward the two dies 100a, 100b disposed on both sides 21a,21b in the transfer direction of the pouch-type battery 1 indicated by an arrow, and the two sides 21a, 21b of the pouch-type battery 1 are inserted into inlets 112 of the folding formation spaces 110a, 110b of the two dies 100a, 100b, respectively.

As the pouch-type battery 1 is transferred, the left side 21a passes through the folding formation space 110a of the left die 100a, and the right side 21b passes through the folding formation space 110b of the right die 100b. The folding formation spaces 110a, 110b of the two dies 100a, 100b are shaped such that the sides 21a, 21b are gradually folded, and the outlet 116 is formed to provide a final folding shape. Accordingly, as the two sides 21a, 21b of the pouch-type battery 1 pass through the folding formation spaces 110a, 110b of the two dies 100a, 100b, the two sides 21a, 21b are gradually folded, and when the two sides 21a, 21b come out of the folding formation spaces 110a, 110b of the two dies 100a, 100b, the final folded shape is obtained.

Although FIG. 3 illustrates a case where both sides 21a,21b are folded simultaneously, only one side 21a;21b may be folded or both sides 21a, 21b may be folded in turn rather than simultaneously.

The configuration of the die 100a;100b used according to embodiments of the present disclosure is described below using the case of secondary folding as an example.

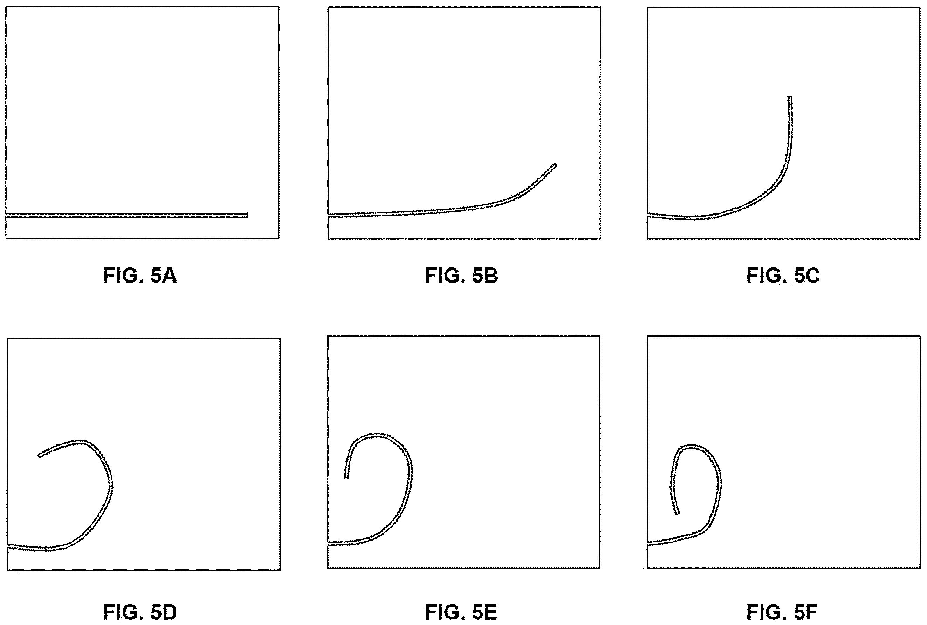

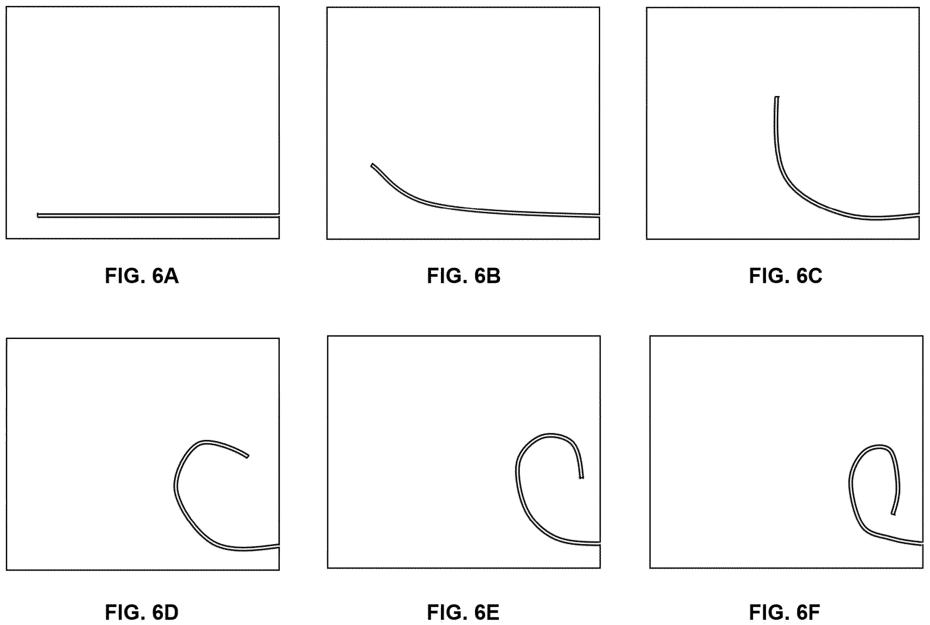

FIG. 4 is a plan view of a die 100 according to an embodiment of the present disclosure and illustrates the cross-sectional positions of the cross-sectional views shown in FIGS. 5A-5F and 6A-6F.

FIG. 5A is a front view (showing inlet 112) of a right die 100b according to embodiments of the present disclosure, FIGS. 5B to 5E are cross-sectional views of the right die 100b, and FIG. 5F is a rear view (showing outlet 116 from the side with inlet 112) of the right die 100b. FIG. 6A is a front view (showing inlet 112) of a left die 100a according to embodiments of the present disclosure, FIGS. 6B to 6E are cross-sectional views of the left die 100a, and FIG. 6F is a rear view (showing outlet 116 from the side with inlet 112) of the left die. FIGS. 5B to 5E and FIGS. 6B to 6E illustrate cross-sectional views taken along lines A-A', B-B', C-C', and D-D' in FIG. 4, respectively. Since the front views and the cross-sectional views in FIGS. 5A-5E and 6A-6F are views viewed from the front direction, the rear views are also illustrated as views viewing the rear from the front direction for consistency with other drawings.

As illustrated in FIG. 5A and FIG. 6A, the inlets 112 of the folding formation spaces 110a and 110b of the dies 110a and 110b, into which the pouch sides 21a and 21b are inserted, have a straight shape, but the outlets 116 of the folding formation spaces 110a and 110b have final shapes of the pouch sides 21a and 21b, secondarily folded as illustrated in FIG. 5F and FIG. 6F. As illustrated in FIG. 5B to 5E and FIG. 6B to 6E, the folding formation spaces 110a and 110b are each configured to gradually change from the shape of the inlet 112 to the shape of the outlet 116.

Accordingly, as the pouch-type battery 1 is transferred, the left side 21a passes through the folding formation space 110a of the left die 100a and the right side 21b passes through the folding formation space 110b of the right die 100b, and the two sides 21a, 21b are gradually folded, so that when the two sides 21a, 21b come out of the outlets 116 of the folding formation spaces 110a and 110b of the two dies 100a,100b, the two sides 21a, 21b have secondarily folded shapes as illustrated in FIG. 5F and FIG. 6F.

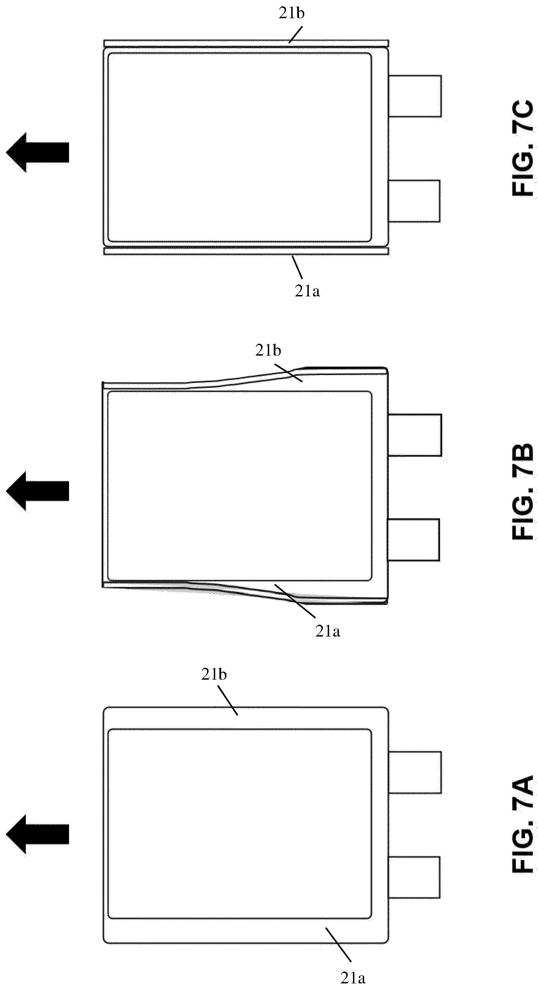

Drawing conceptually illustrating this are FIGS. 7A to 7C. In FIG. 7A to 7C, the pouch-type battery 1 moves in the direction of the arrow and both sides thereof pass through the die 100a, 100b. FIG. 7A illustrates the state of the pouch-type battery 1 before passing through the die 100a, 100b, FIG. 7B illustrates the state of the pouch-type battery 1 passing through the die 100a, 100b, and FIG. 7C illustrates the state of the pouch-type battery 1 after passing through the die 100a, 100b.

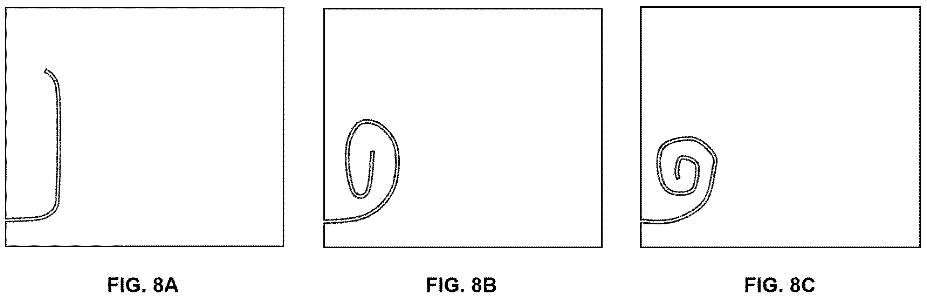

Embodiments of the present disclosure can be applied not only to secondary folding but also to primary folding, tertiary folding, and quaternary folding. FIG. 8A to FIG. 8C are rear views (showing outlets 116) of three dice 100 according to different embodiments of the present disclosure. FIG. 8A illustrates an example of primary folding, FIG. 8B illustrates an example of tertiary folding, and FIG. 8C illustrates an example of quaternary folding. In FIGS. 8A to 8C, the folding formation space 110is configured to gradually change from the shape of a straight inlet 112 to the shape of an outlet 116 as illustrated in FIG. 8A to FIG. 8C.

According to embodiments, a notch 910 may be formed at the inlets 112 of the folding formation spaces 110a and 110b so that the sides 21a, 21b of the pouch-type battery 1 can be properly inserted into the folding formation spaces 110a and 110b. Such an example is illustrated in FIG. 9. FIG. 9 is a cross-section view of the left die 100a when viewed from the right side of the left die 100a, and illustrates a state in which, when a notch 910 is formed at the inlet 112 of the folding formation space 110a of the left die 100a, the side 21a of the pouch-type battery 1 enters the folding formation space 110a. As illustrated in FIG. 9, even when the side 21a of the pouch-type battery 1 is slightly lifted, the side 21a can be reliably guided into the folding formation space 110a due to the notch 910 formed at the inlet 112 of the folding formation space 110a.

FIG. 10 is a functional block diagram illustrating an example configuration of an apparatus 1000 for folding sides 21a, 21b of a pouch-type battery 1 according to embodiments of the present disclosure.

The apparatus 1000 for folding sides of a pouch-type battery 1 in FIG. 10 includes a left die 100a and a right die 100b in which folding formation spaces 110a, 110b are formed, respectively.

Each of the folding formation spaces 110a, 110b includes an inlet 112 formed on a front side of a die 100 and through which a side 21 of the pouch-type battery 1 enters, an outlet 116 formed on a rear side of the die 100 and through which the side 21 of the pouch-type battery 1 exits, and a side opening 114 formed on the side of the die 100 to guide the side 21 of the pouch-type battery 1 to pass therethrough. A left side 21a of the pouch-type battery 1 is inserted into the inlet 112 of the folding formation space 110a of the left die 100a, and a right side 21b of the pouch-type battery 1 is inserted into the inlet 112 of the folding formation space 110b of the right die 100b. The two sides 21a, 21b of the pouch-type battery 1 move along the side openings in a state of being inserted into the folding formation spaces 110a and 110b, and then exit through the outlets 116.

The inlet 112 of the folding formation space 110b has a straight cross-sectional shape at the inlet 112 where the side 21 of the pouch-type battery 1 enters, and the outlet 116 has a final folding cross-sectional shape of the pouch-type battery side 21. As illustrated in FIGS. 5A-5F and 6A-6F, the folding formation space 110 between the inlet 112 and the outlet 116 is formed so that the side 21 of the pouch-type battery 1 having entered the inlet 112 is gradually folded while passing through the folding formation space 110 and, at the outlet 116, has a final folding shape. The left die 100a has a shape that is inverted left and right from the right die 100b.

The apparatus 1000 for folding sides of a pouch-type battery 1 includes a transfer unit 220 that transfers the pouch-type battery 1 between the left die 100a and the right die 100b in the longitudinal direction of the dies 100a and 100b as illustrated in FIG. 3. As the pouch-type battery 1 is transferred by the transfer unit 220, the two sides 21a and 21b of the pouch-type battery 1 pass through the folding formation spaces 110a and 110b of the two dies 100a and 100b, and in this process, the shapes of the two sides 21a and 21b gradually change to the shapes at the outlets 116 of the folding formation spaces 110a and 110b.

In embodiments, the apparatus 1000 for folding sides of a pouch-type battery 1 may include a die heating unit 230 that heats the two dies 100a, 100b at a predetermined temperature so that the sides 21 of the pouch-type battery 1 can be folded well. The die heating unit 230 heats the die 100 at an optimal temperature, at which the pouch can be folded well, depending on the pouch material of the pouch-type battery 1.

In embodiments, the apparatus 1000 for folding sides of a pouch-type battery 1 may further include a side post-processing unit 240 that presses the two sides 21a, 21b of the pouch-type battery 1 having passed through the dies 100a and 100b toward a body of the battery from the side. The side post-processing unit 240 may include, for example, rollers disposed on both sides in the travel direction of the pouch-type battery 1. Each roller may have a cylindrical shape with a diameter that gradually increases in the travel direction of the battery. Alternatively, the side post-processing unit 240 may be a press that presses the two sides 21a, 21b of the battery toward the body of the battery from the side.

The control unit 210 may control the operations of the transfer unit 220, the die heating unit 230, and the side post-processing unit 240.

Embodiments are set out in the following clauses.

Clause 1. An apparatus for folding sides of a pouch-type battery, comprising:
a die comprising a folding formation space comprising an inlet through which a side of a pouch-type battery enters, an outlet through which the side of the pouch-type battery exits, and a side opening formed on one side of the die to guide the side of the pouch-type battery to pass therethrough; and a transfer unit that transfers the pouch-type battery along a longitudinal direction of the die.

Clause 2. The apparatus for folding sides of a pouch-type battery of Clause 1, wherein the folding formation space is formed so that the side of the pouch-shaped battery having entered the inlet is gradually folded while moving and, at the outlet, has a final folding shape.

Clause 3. The apparatus for folding sides of a pouch-type battery of Clause 2, wherein the inlet of the folding formation space has a straight shape, and the outlet has, as the final folding shape, a shape in which the side is folded once.

Clause 4. The apparatus for folding sides of a pouch-type battery of Clause 2, wherein the inlet of the folding formation space has a straight shape, and the outlet has, as the final folding shape, a shape in which the side is folded a plurality of times.

Clause 5. The apparatus for folding sides of a pouch-type battery of Clause 2, wherein a notch is formed in the inlet.

Clause 6. The apparatus for folding sides of a pouch-type battery of Clause 2, wherein the die comprises: a left die for folding a left side of the pouch-type battery; and a right die for folding a right side of the pouch-type battery.

Clause 7. The apparatus for folding sides of a pouch-type battery of Clause 1, further comprising: a side post-processing unit that presses, toward a battery body, folded sides of the pouch-type battery having passed through the die.

Clause 8. The apparatus for folding sides of a pouch-type battery of Clause 1, further comprising: a die heating unit that heats the die at a predetermined temperature.

Clause 9. A method for folding sides of a pouch-type battery, comprising: allowing a side of a pouch-type battery to pass from an inlet of a die comprising a folding formation space comprising the inlet through which the side of the pouch-type battery enters, an outlet through which the side of the pouch-type battery exits, and a side opening formed on one side of the die to guide the side of the pouch-type battery to pass therethrough.

Clause 10. The method for folding sides of a pouch-type battery of Clause 9, wherein a space between the inlet and the outlet of the folding formation space is formed so that the side of the pouch-shaped battery having entered the inlet is gradually folded while moving and, at the outlet, has a final folding shape.

Clause 11. The method for folding sides of a pouch-type battery of Clause 10, wherein the inlet of the folding formation space has a straight shape, and the outlet has, as the final folding shape, a shape in which the side is folded once.

Clause 12. The method for folding sides of a pouch-type battery of Clause 10, wherein the inlet of the folding formation space has a straight shape, and the outlet has, as the final folding shape, a shape in which the side is folded a plurality of times.

Clause 13. The method for folding sides of a pouch-type battery of Clause 10, wherein a left side of the pouch-type battery is arranged to pass through a left die and a right side of the pouch-type battery is arranged to pass through a right die.

Clause 14. The method for folding sides of a pouch-type battery of Clause 10, wherein a notch is formed in the inlet of the folding formation space.

Clause 15. The method for folding sides of a pouch-type battery of Clause 9, further comprising: pressing, toward a battery body, folded sides of the pouch-type battery having passed through the die.

Clause 16. The method for folding sides of a pouch-type battery of Clause 9, further comprising: heating the die at a predetermined temperature.

Clause 17. A die formed with a folding formation space through which a side of a pouch-type battery passes, wherein the folding formation space comprises: an inlet formed on a front side of the die and through which the side of the pouch-type battery enters; an outlet formed on a rear side of the die and through which the side of the pouch-type battery exits; and a side opening formed on a side of the die to guide the side of the pouch-type battery to pass therethrough.

Clause 18. The die for folding sides of a pouch-type battery of Clause 17, wherein the folding formation space between the inlet and the outlet is formed so that the side of the pouch-shaped battery having entered the inlet is gradually folded while moving and, at the outlet, has a final folding shape.

Clause 19. The die for folding sides of a pouch-type battery of Clause 18, wherein the inlet has a straight shape, and the outlet has, as the final folding shape, a shape in which the side is folded once or a plurality of times.

Clause 20. The die for folding sides of a pouch-type battery of Clause 17, wherein a notch is formed in the inlet.

Although the present disclosure has been described above with respect to embodiments thereof, the present disclosure is not limited thereto. Various modifications and variations can be made by those skilled in the art within the scope of the present disclosure and the scope of equivalence of the appended claims.

## Claims

1. A die comprising a folding formation space through which a side of a pouch-type battery passes, wherein the folding formation space comprises:
an inlet through which the side of the pouch-type battery enters;
an outlet through which the side of the pouch-type battery exits; and
a side opening formed on a side of the die to guide the side of the pouch-type battery to pass therethrough.

2. The die for folding sides of a pouch-type battery as claimed in claim 1, wherein:
the inlet is formed on a front side of the die; and
the outlet is formed on a rear side of the die.

3. The apparatus for folding sides of a pouch-type battery as claimed in claim 1 or 2, wherein the folding formation space is formed so that the side of the pouch-shaped battery having entered the inlet is gradually folded while moving and, at the outlet, has a final folding shape.

4. The apparatus for folding sides of a pouch-type battery as claimed in claim 3, wherein:
the inlet of the folding formation space has a straight shape, and the outlet has, as the final folding shape, a shape in which the side is folded once; or
the inlet of the folding formation space has a straight shape, and the outlet has, as the final folding shape, a shape in which the side is folded a plurality of times.

5. The apparatus for folding sides of a pouch-type battery as claimed in any preceding claim, wherein a notch is formed in the inlet.

6. The apparatus for folding sides of a pouch-type battery as claimed in any preceding claim, wherein the die comprises:
a left die for folding a left side of the pouch-type battery; and
a right die for folding a right side of the pouch-type battery.

7. An apparatus for folding sides of a pouch-type battery, comprising:
the die according to any preceding claim; and
a transfer unit that transfers the pouch-type battery along a longitudinal direction of the die.

8. The apparatus for folding sides of a pouch-type battery as claimed in any preceding claim, further comprising:
a side post-processing unit that presses, toward a battery body, folded sides of the pouch-type battery having passed through the die.

9. The apparatus for folding sides of a pouch-type battery as claimed in any preceding claim, further comprising:
a die heating unit that heats the die at a predetermined temperature.

10. A method for folding sides of a pouch-type battery, comprising:
allowing a side of a pouch-type battery to pass from an inlet of a die comprising a folding formation space comprising the inlet through which the side of the pouch-type battery enters, an outlet through which the side of the pouch-type battery exits, and a side opening formed on one side of the die to guide the side of the pouch-type battery to pass therethrough.

11. The method for folding sides of a pouch-type battery as claimed in claim 10, wherein a space between the inlet and the outlet of the folding formation space is formed so that the side of the pouch-shaped battery having entered the inlet is gradually folded while moving and, at the outlet, has a final folding shape.

12. The method for folding sides of a pouch-type battery as claimed in claim 11, wherein:
the inlet of the folding formation space has a straight shape, and the outlet has, as the final folding shape, a shape in which the side is folded once; or
the inlet of the folding formation space has a straight shape, and the outlet has, as the final folding shape, a shape in which the side is folded a plurality of times.

13. The method for folding sides of a pouch-type battery as claimed in claim 10, 11 or 12, wherein at least one of:
a left side of the pouch-type battery is arranged to pass through a left die and a right side of the pouch-type battery is arranged to pass through a right die;
a notch is formed in the inlet of the folding formation space.

14. The method for folding sides of a pouch-type battery as claimed in claim 9, further comprising:
pressing, toward a battery body, folded sides of the pouch-type battery having passed through the die.

15. The method for folding sides of a pouch-type battery as claimed in claim 9, further comprising:
heating the die at a predetermined temperature.
